# EUROPÄISCHE PATENTSCHRIFT

(11) **EP 1 751 896 B1**
(45) Veröffentlichungstag und Bekanntmachung des Hinweises auf die Patenterteilung: **20.08.2008**
(21) Anmeldenummer: 05754604.6
(22) Anmeldetag: 27.05.2005
(51) Int. Cl.: H04J 3/08

(54) **SCHALTUNG ZUR SIGNALÜBERTRAGUNG IN EINEM NETZWERKKNOTEN, INSBESONDERE FÜR EINE KANALKARTE FÜR EINE OPTISCHE WDM-SIGNALÜBERTRAGUNGSEINRICHTUNG**
CIRCUIT FOR TRANSMITTING SIGNALS IN A NETWORK NODE, PARTICULARLY FOR A CHANNEL CARD FOR AN OPTICAL WAVELENGTH DIVISION MULTIPLEX (WDM) SIGNAL TRANSMITTING DEVICE
CIRCUIT POUR LA TRANSMISSION DE SIGNAUX DANS UN NOEUD DE RESEAU, NOTAMMENT POUR UNE CARTE DE CANAUX POUR UN DISPOSITIF OPTIQUE DE TRANSMISSION DE SIGNAUX MRL

(30) Priorität: 03.06.2004 DE 102004027068
(43) Veröffentlichungstag der Anmeldung: 14.02.2007
(73) Patentinhaber: Adva AG Optical Networking, 82152 Martinsried (DE)
(72) Erfinder: HINDERTHÜR, Henning, 86923 Finning (DE); HOLZBRECHER, Christian, 98527 Suhl (DE); STIER, Reinhard, 98544 Zella-Mehlis (DE); SCHÜTTEMEYER, Hans-Jörg, 14163 Berlin (DE); WIRSCHING, Mario, 98527 Suhl (DE)
(74) Vertreter: Eder, Thomas
(86) Internationale Anmeldenummer: PCT/DE2005/000968
(87) Internationale Veröffentlichungsnummer: WO 2005/119952

(56) Entgegenhaltungen:
- EP-A- 0 437 198
- US-A1- 2003 193 972

## Beschreibung

Die Erfindung betrifft eine Schaltung zur Signalübertragung in einem Netzwerkknoten, insbesondere für eine Kanalkarte für eine optische WDM-Signalübertragungseinrichtung. In Netzwerken, beispielsweise optischen Netzwerken, müssen in Netzwerkknoten, je nach den konkreten Erfordernissen, bestimmte Teilsignale oder Kanäle eines WDM-(Wavelength Division Mulitplex) Signals gedroppt, d.h. der lokalen Seiten zur weiteren Verarbeitung zugeführt, und andere Teilsignale bzw. Kanäle dem WDM-Signal hinzugefügt oder durch den Knoten durchgeschleift, dabei gegebenenfalls verstärkt und einem oder mehreren weiteren Netzwerkknoten als WDM-Signal zugeführt werden. Hierzu ist die Signalübertragungseinrichtung eines Netzwerkknotens üblicherweise modular ausgebildet, da, je nach den jeweils zu berücksichtigenden Erfordernissen im betreffenden Netzwerkknoten unterschiedliche Schaltungskomponenten zum Einsatz kommen müssen. Die Realisierung eines derartigen Netzwerkknotens ist beispielsweise in der US 2003/0193972 A1 beschrieben. Hierbei wird eine Mehrzahl von Schalteinheiten verwendet, die in besonderer Weise zu Transceiver-Bänken verbunden sind, um die Zuverlässigkeit des Netzwerks zu verbessern. Dabei werden insbesondere unterschiedliche Schalteinheiten in den sendenden und empfangenden Transceiver-Bänken, im eigentlichen Add/Drop-Mulitplexer und in der lokalen Transceiver-Bank verwendet, die je nach gewünschter Funktionsweise eine Drop-Funktion, eine Drop-und-Continue-Funktion, eine reine Continue-Funktion oder eine Loop-Back-Funktion ermöglichen.

Bei der Realisierung einer Signalübertragungseinrichtung eines optischen Netzwerkknotens kommen als Module beispielsweise passive und aktive optische und/oder elektronische Filterkomponenten, optische Verstärker und aktive Kanalmodule oder Kanalkarten zum Einsatz.

Derartige Module, insbesondere Kanalkarten, sind bei bekannten Signalübertragungseinrichtungen, je nach Einzatzzweck, in einer Vielzahl unterschiedlicher Ausführungsformen erforderlich. Diese unterscheiden sich beispielsweise in den Eigenschaften der Transceiver-Module, die zur Verbindung der jeweiligen Kanalkarte mit der lokalen Seite eines Netzwerkknotens bzw. mit entsprechenden weiteren, local-seitigen Signalverarbeitungseinrichtungen und zur Verbindung der Karte mit der Remote-Seite bzw. mit entsprechenden weiteren, remote-seitigen Signalverarbeitungseinrichtungen des Netzwerkknotens oder des gesamten weiteren Netzwerkes erforderlich sind. Die Transceiver-Module können beispielsweise hinsichtlich der Ankoppelung der optischen Seite an verschiedene Lichtwellenleitertypen (Einmodenfasern, Mehrmodenfasern), hinsichtlich der jeweils verwendeten Wellenlänge des optischen Sendeelements und/oder des optischen Empfangselements oder hinsichtlich der Datenrate des jeweils zu empfangenden bzw. zu sendenden Signals verschieden sein.

Des Weiteren kann sich die Struktur der Kanalkarten hinsichtlich der von der Karte zu übernehmenden Aufgaben unterscheiden. Beispielsweise kann es erforderlich sein, ein empfangenes Signal lediglich zu verstärken und/oder aufzubereiten und durch den Netzwerkknoten durchzuschleifen, ohne dass der betreffende Kanal im Netzwerkknoten gedroppt wird. Soll dagegen ein Signal bzw. Kanal gedroppt werden, so kann eine Umsetzung des Signals von einer Empfangswellenlänge auf eine andere lokale Sendewellenlänge und umgekehrt erforderlich sein. Soll die Karte einen Protection-Mechanismus realisieren, so ist es erforderlich, auf der Kanalkarte auf der Remote-Seite zwei Transceiver-Einheiten vorzusehen, wobei beide Transceiver-Module mit demselben Sendesignal in Richtung auf die Remote-Seite der Kanalkarte angesteuert werden können.

Es ist, wie bereits vorstehend kurz angedeutet, bekannt, für jeden speziellen Anwendungszweck eine entsprechende Kanalkarte herzustellen und diese als Modul in eine gesamte Signalübertragungseinrichtung zur Realisierung eines Netzwerkknotens einzusetzen. Ändern sich die Anforderungen an den betreffenden Netzwerkknoten, so kann die jeweilige Kanalkarte durch eine andere Kanalkarte ausgetauscht werden, beispielsweise wenn auf der lokalen Seite des Netzwerkknotens oder der Remote-Seite des Netzwerkknotens andere optische Übertragungswellenlängen für den betreffenden Kanal bzw. die betreffenden Kanäle verwendet werden sollen.

Für den Verwender und Hersteller derartiger Signalübertragungseinrichtungen ergibt sich daher der Nachteil, dass eine große Anzahl unterschiedlicher Kanalkarten erworben bzw. hergestellt und bevorratet werden muss. Dies führt, neben der Tatsache, dass für jeden Anwendungsfall eigene Kanalkarten entwickelt werden müssen, zu hohen Kosten für die einzelnen Kanalkarten.

Ausgehend von diesem Stand der Technik liegt der vorliegenden Erfindung die Aufgabe zugrunde, eine Schaltung zur Signalübertragung in einem Netzwerkknoten, insbesondere für eine Kanalkarte für eine optische WDM-Signalübertragungseinrichtung, zu schaffen, welche flexibel konfigurierbar und einsetzbar ist, ohne dass jeweils ein Austausch der kompletten Schaltung bzw. der kompletten Kanalkarte erforderlich ist. Zudem soll die erfindungsgemäße Schaltung einfach und kostengünstig herstellbar sein.

Die Erfindung löst diese Aufgabe mit den Merkmalen des Patentanspruchs 1.

Die Erfindung geht von der Erkenntnis aus, dass eine erfindungsgemäße Schaltung zur Signalübertragung in einem Netzwerkknoten, insbesondere eine Kanalkarte, dann für eine Vielzahl in der Praxis relevanter Fälle einsetzbar ist, wenn die Schaltung bzw. die Karte eine erste, der Local-Seite des Netzwerkknotens zugeordnete Aufnahmeeinrichtung für eine local-seitige Transceivereinheit aufweist und zwei weitere Aufnahmeeinrichtungen, die der Remote-Seite des Netzwerkknotens zugeordnet sind und in denen ebenfalls jeweils eine remote-seitige Transceivereinheit aufnehmbar ist.

Hierdurch ergibt sich der Vorteil, dass je nach Anwendungszweck in den drei Aufnahmeeinrichtungen die jeweils passende Transceivereinheit einsetzbar ist. Die Transceivereinheit kann dabei unter einer Vielzahl üblicher Transceivereinheiten, beispielsweise abhängig vom Typ des anzukoppelnden bzw. angekoppelten Lichtwellenleiters, der Übertragungswellenlänge und der Datenrate des Sende-/Empfangssignals ausgewählt werden.

Durch die freie Bestückbarkeit der Aufnahmeeinrichtungen kann eine Kanalkarte geschaffen werden, die für eine Vielzahl unterschiedlicher Anwendungsfälle einsetzbar ist. Zur Anpassung an den jeweiligen konkreten Zweck muss lediglich eine Bestückung mit wenigstens zwei Transceivereinheiten erfolgen.

Die erfindungsgemäße Schaltung zur Signalübertragung weist neben den drei Aufnahmeeinrichtungen eine Signalschalteinheit auf, die sechs Anschlussports umfasst. Jeder Anschlussport ist mit jeweils einem der internen Sendeportanschlüsse oder Empfangsportanschlüsse der Aufnahmeeinrichtungen verbunden, wobei die Signalschalteinheit derart ansteuerbar ist, dass für jeden der internen Empfangsportanschlüsse festgelegt wird, ob und mit welchem ausgewählten internen Sendeportanschluss oder mit welchen mehreren ausgewählten internen Sendeportanschlüssen der betreffende interne Empfangsportanschluss verbunden ist.

Durch die Verwendung einer Signalschalteinheit kann die Schaltung bzw. die Signalkarte zur Lösung unterschiedlicher Aufgaben verwendet werden, wie das Durchschleifen des Empfangssignals, das Droppen eines Empfangssignals oder das Droppen und gleichzeitige Durchschleifen eines Empfangssignals. Die Signalschalteinheit besteht erfindungsgemäß aus drei Vierport-Schalteinheiten mit jeweils zwei internen Ports zur Verbindung der Vierport-Schalteinheiten untereinander und jeweils zwei, die sechs Anschlussports realisierenden externen Ports.

Nach einer Ausführungsform der Erfindung kann die Signalschalteinheit so ansteuerbar sein, dass der interne Empfangsportanschluss einer ausgewählten remote-seitigen Aufnahmeeinrichtung mit dem Sendeportanschluss der local-seitigen Aufnahmeeinrichtung verbunden ist und der interne Empfangsportanschluss der local-seitigen Aufnahmeeinrichtung mit dem Sendeportanschluss der ausgewählten remote-seitigen Aufnahmeeinrichtung. Dies entspricht dem Standardfall, in dem die Kanalkarte das Senden und Empfangen eines Kanals zwischen der Local-Seite und der Remote-Seite der Kanalkarte bzw. des Netzwerkknotens ermöglicht.

Nach einer anderen Ausführungsform kann die Signalschalteinheit zur Realisierung einer Protection-Funktion so ansteuerbar sein, dass der interne Empfangsportanschluss der Schaltung der local-seitigen Aufnahmeeinrichtung zusätzlich mit dem Sendeportanschluss der zweiten, nicht ausgewählten remote-seitigen Aufnahmeeinrichtung verbunden ist.

Sind beide remote-seitige Aufnahmeeinrichtungen mit entsprechenden Transceiver-Modulen bestückt, so das Signal, welches von der Local-Seite des Netzwerkknotens auf die Remote-Seite des Netzwerkknotens übertragen werden soll, beiden remote-seitigen Transceivereinheiten zugeführt. Wird beispielsweise der Lichtwellenleiter, der mit dem einen remote-seitigen Transceiver-Modul verbunden ist unterbrochen, so wird das zu übertragende Signal immer noch über den weiteren Lichtwellenleiter übertragen, welcher mit der anderen remote-seitigen Transceivereinheit verbunden ist.

Nach einer weiteren Ausführungsform der Erfindung kann die Signalschalteinheit so ansteuerbar sein, dass der im Normalbetrieb in der Signalschalteinheit offen terminierte interne Empfangsportanschluss der zweiten, nicht ausgewählten remote-seitigen Aufnahmeeinrichtung im Protection-Betrieb mit dem Sendeportanschluss der local-seitigen Aufnahmeeinrichtung verbunden ist, wobei vorzugsweise dann vom Normalbetrieb in den Protection-Betrieb umgeschaltet wird, wenn am internen Empfangsportanschluss der ausgewählten remote-seitigen Aufnahmeeinrichtung kein Signal mehr detektierbar ist (Loss-of-Light).

Auf diese Weise ist es möglich, den Empfangsweg auf den Empfangsportanschluss der nicht ausgewählten Aufnahmeeinrichtung umzuschalten, wenn im Arbeitspfad kein Signal mehr detektierbar ist.

Diese Ansteuerung der Signalschalteinheit kann dabei mittels einer externen Steuereinheit erfolgen, welche mit der erfindungsgemäßen Schaltung verbunden ist. Selbstverständlich kann die Ansteuerschaltung einschließlich der Schaltung für das Detektieren des Loss-of-Light auch in der erfindungsgemäßen Schaltung, insbesondere in der Signalschalteinheit, integriert sein.

Nach einer weiteren Ausführungsform der Erfindung kann die Signalschalteinheit zur Realisierung einer Drop-and-Continue-Funktion so ansteuerbar sein, dass der interne Empfangsportanschluss einer ausgewählten remote-seitigen Aufnahmeeinrichtung mit dem Sendeportanschluss der local-seitigen Aufnahmeinrichtung verbunden ist und gleichzeitig mit dem Sendeportanschluss der nicht ausgewählten, remote-seitigen Aufnahmeeinrichtung, wobei vorzugsweise jede der remote-seitigen Aufnahmeeinrichtungen zur Realisierung dieser Drop-and-Continue-Schaltfunktion auswählbar ist.

Diese Funktion ist beispielsweise zur Übertragung eines Broadcast-Signals, beispielsweise eines TV-Signals einsetzbar, welches zum einen dem betreffenden Netzwerkknoten zugeführt und zum anderen gleichzeitig durch den Netzwerkknoten zur Übertragung an weitere Netzwerkknoten hindurchgeschleift werden soll.

Nach einer anderen Ausführungsform der Erfindung ist die Signalschalteinheit zur Realisierung einer Regenerations- und/oder Konversions-Funktion bezüglich eines remote-seitigen Signals so ansteuerbar, dass der interne Empfangsportanschluss einer ausgewählten remote-seitigen Aufnahmeeinrichtung mit dem Sendeportanschluss der nicht ausgewählten, remote-seitigen Aufnahmeeinrichtung verbunden ist und vorzugsweise auch der interne Empfangsportanschluss der nicht ausgewählten, remote-seitigen Aufnahmeeinrichtung mit dem Sendeportanschluss der ausgewählten, remote-seitigen Aufnahmeeinrichtung.

Diese Funktion der erfindungsgemäßen Schaltung ermöglicht beispielsweise das Umsetzen des optischen Signals eines ausgewählten Kanals auf eine andere Wellenlänge und/oder die Regenerierung und gegebenenfalls Verstärkung des betreffenden Signals.

Schließlich kann die Signalschalteinheit auch zur Realisierung einer Loop-Funktion ausgebildet sein, wobei der interne Empfangsportanschluss einer, mehrere oder aller Aufnahmeeinrichtungen mit dem Sendeportanschluss der jeweils selben Aufnahmeinrichtung verbunden ist. Diese Funktion dient beispielsweise für Wartungszwecke des Netzwerks bzw. des betreffenden Netzwerkknotens.

Die drei Vierport-Schalteinheiten, aus welchen erfindungsgemäß die Signalschalteinheit besteht, können dabei so miteinander verschaltet sein, dass ein erster interner Port der ersten Vierport-Schalteinheit mit einem ersten internen Port der zweiten Vierpol-Schalteinheit verbunden ist und ein zweiter interner Port der ersten Vierport-Schalteinheit mit einem ersten internen Port der dritten Vierpol-Schalteinheit. Zusätzlich ist dabei ein zweiter interner Port der zweiten Vierpol-Schalteinheit mit einem zweiten internen Port der dritten Vierpol-Schalteinheit verbunden. Der Empfangsportanschluss der local-seitigen Aufnahmeeinrichtung ist dabei mit einem ersten externen Port der ersten Vierpol-Schalteinheit verbunden und der Sendeportanschluss der local-seitigen Aufnahmeeinrichtung mit einem zweiten externen Port der ersten Vierpolschalteinheit. Schließlich sind auch die Sendeportanschlüsse der beiden remote-seitigen Aufnahmeeinrichtungen mit jeweils einem externen Port der zweiten Vierpolschalteinheit verbunden und die Empfangsportanschlüsse der beiden remote-seitigen Aufnahmeeinrichtungen mit jeweils einem externen Port der dritten Vierpolschalteinheit.

Die Vierpolschalteinheiten können dabei, insbesondere hinsichtlich der Schaltfunktionen, identisch ausgebildet sein. Hierdurch wird die Anzahl der unterschiedlichen Komponenten zur Realisierung der erfindungsgemäßen Schaltung reduziert.

Jede Vierpolschalteinheit kann so ansteuerbar sein, dass die Ports in beliebiger Weise miteinander, auch ein Port mit mehreren Ports gleichzeitig, verbunden werden können.

Auf diese Weise lässt sich praktisch jeder der internen Sende- oder Empfangsportanschlüsse mit jedem beliebigen anderen internen Sende- oder Empfangsportanschluss verbinden.

Nach der bevorzugten Ausführungsform der Erfindung kann jeder der Vierpol-Schalteinheiten in mehrere ausgewählte oder alle der folgenden Schaltstellungen steuerbar sein:
a) Schaltstellung 1: Die beiden internen Ports und/oder die beiden externen Ports sind durchgeschaltet;
b) Schaltstellung 2: Der erste externe Port ist auf den ersten internen Port durchgeschaltet oder umgekehrt und/oder der zweite externe Port ist auf den zweiten internen Port durchgeschaltet oder umgekehrt;
c) Schaltstellung 3: Der erste externe Port ist auf den zweiten internen Port durchgeschaltet oder umgekehrt und/oder der erste interne Port ist auf den zweiten externen Port durchgeschaltet oder umgekehrt;
d) Schaltstellung 4: Entweder der erste oder der zweite interne Port ist gleichzeitig auf den ersten und zweiten externen Port durchgeschaltet;
e) Schaltstellung 5: Einer der internen Ports ist gleichzeitig auf den jeweils anderen internen Port und einen der externen Ports durchgeschaltet.

Mit diesen Schaltstellungen der drei Vierpol-Schalteinheiten lassen sich sämtliche der vorgenannten Schaltfunktionen, und damit die wesentlichsten, in der Praxis relevanten Funktionen einer Kanalkarte, auf einfache und kostengünstige Weise realisieren.

Nach einer weiteren Ausführungsform der Erfindung kann im Signalpfad unmittelbar vor dem Sendeportanschluss einer, mehrere oder aller Aufnahmeeinrichtungen ein Takt-und Daten-Aufbereitungsschaltkreis angeordnet sein. Hierdurch ergibt sich unmittelbar vor dem Sendeportanschluss der betreffenden Aufnahmeeinrichtung bzw. dem Sendeport einer darin eingesetzten Transceivereinheit ein sehr sauberer, dem idealen Verlauf angenäherter Verlauf des betreffenden Sendesignals.

Um die erfindungsgemäße Schaltung auch hinsichtlich des Parameters der Bitrate der zu verarbeitenden Signale möglichst universell einsetzbar zu gestalten, kann der Takt- und Daten-Aufbereitungsschaltkreis einen breitbandigen Face-locked-Loop-Schaltkreis umfassen, der in der Lage ist, innerhalb eines breitbandigen Bitratenbereichs auf den Takt des ihm zugeführten Signals einzurasten und die jeweilige Bitrate zu ermitteln. Zusätzlich kann eine Steuereinheit vorgesehen oder in den Takt- und Daten-Aufbereitungsschaltkreis integriert sein, welche die ermittelte Bitrate mit gespeicherten Werten für Arbeitsbitraten vergleicht, für die die Schaltung spezifiziert ist. Weicht die ermittelte Bitrate um mehr als einen vorgegebenen Betrag von allen Arbeitsbitraten ab, so kann die Steuereinheit den betreffenden Signalpfad blockieren und gegebenenfalls ein entsprechendes Fehlersignal erzeugen.

Weitere Ausführungsformen der Erfindung ergeben sich aus den Unteransprüchen.

Die Erfindung wird nachfolgend anhand eines in der Zeichnung dargestellten Ausführungsbeispiels näher erläutert. In der Zeichnung zeigen
- Fig. 1: ein schematisches Blockdiagramm einer Schaltung zur Signalübertragung in einem Netzwerkknoten für eine Kanalkarte nach der Erfindung;
- Fig. 2 - 6: die Schaltung nach Fig. 1 in unterschiedlichen Konfigurationen und
- Fig. 7: schematische Darstellungen der Vierpolschalteinheiten in den Fig. 1 - 6 in möglichen vordefinierten Schaltstellungen.

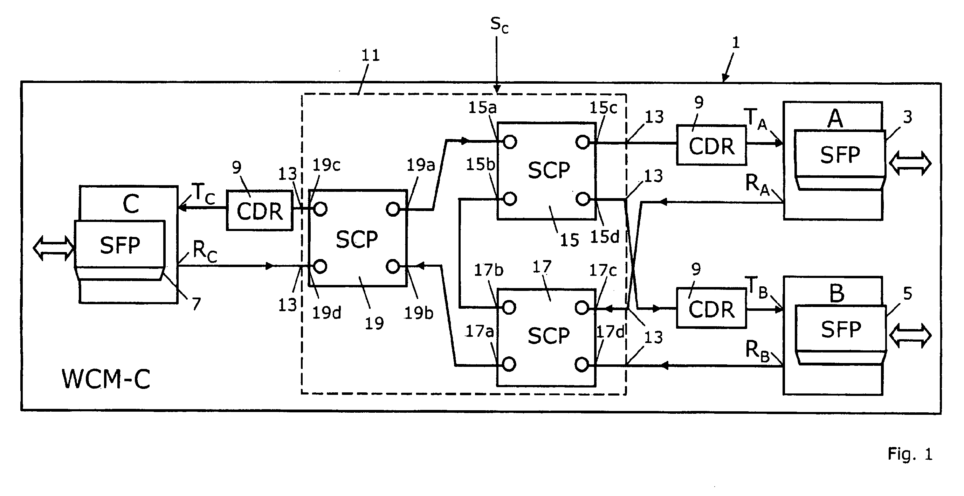

In Fig. 1 ist eine Schaltung 1 zur Signalübertragung in einen Netzwerkknoten schematisch dargestellt. Die Schaltung 1 umfasst zwei remote-seitige Aufnahmeeinrichtungen A, B, die jeweils mit geeigneten Transceivereinheiten 3, 5 bestückbar sind. Die Aufnahmeeinrichtungen A, B sind vorzugsweise so ausgebildet, dass die remote-seitigen Transceivereinheiten 3, 5 austauschbar aufgenommen sind. Die Aufnahmeeinrichtungen A, B können als Käfig oder Steckplatz zur Aufnahme der Transceivereinheiten 3, 5 ausgebildet sein.

Des Weiteren umfasst die Schaltung 1 eine local-seitige Aufnahmeeinrichtung C, die in gleicher Weise ausgebildet sein kann. Sie dient zur Aufnahme einer local-seitigen Transceivereinheit 7. Die externen Anschlüsse der Transceivereinheiten 3, 5 können bei der Realisierung eines optischen Netzwerkknotens mit entsprechenden Lichtwellenleitern verbunden sein. Die Lichtwellenleiter können bereits in Form von Pigtails an die Transceivereinheiten angebunden sein, wobei die freien Pigtail-Enden mittels Stecker oder unlösbarer Spleiße mit den betreffenden weiteren Übertragungsstrecken verbunden werden können.

Die Aufnahmeeinrichtungen A, B, C weisen jeweils interne Sendeportanschlüsse T_{A}, T_{B}, T_{c} und interne Empfangsportanschlüsse R_{A}, R_{B}, R_{C} auf, wobei, auch bei der Realisierung eines Netzwerkknotens für ein optisches Netzwerk den Sendeportanschlüssen T_{A}, T_{B}, T_{C} das jeweils in Richtung auf die Remote-Seite bzw. die Local-Seite der Schaltung zu sendende elektrische Sendesignal zugeführt ist. Ist die betreffende Aufnahmeeinrichtung A, B, C mit einer geeigneten Transceivereinheit 3, 5, 7 bestückt, so wird dieses zu sendende Signal selbstverständlich auch dem betreffenden Sendeport der eingesetzten Transceivereinheit 3, 5, 7 zugeführt.

In gleicher Weise tritt an den Empfangsportanschlüssen R_{A}, R_{B}, R_{C} der Aufnahmeeinrichtungen A, B, C jeweils das betreffende Empfangssignal auf, welches bei eingesetzter Transceivereinheit 3, 5, 7 empfangen und von dem betreffenden Empfangsport der Transceivereinheit 3, 5, 7 dem jeweiligen Empfangsportanschluss R_{A}, R_{B}, R_{C} der jeweiligen Aufnahmeeinrichtung A, B, C zugeführt wird.

Wie in Fig. 1 dargestellt, kann im Signalpfad unmittelbar vor den internen Sendeportanschlüssen T_{A}, T_{B}, T_{c} jeweils ein Takt- und Daten-Aufbereitungsschaltkreis 9 angeordnet sind. Hierdurch wird gewährleistet, dass unmittelbar vor den jeweiligen Sendeports der Transceivereinheiten 3, 5, 7 ein Sendesignal mit einem sauberen Signalverlauf und ohne Jitter vorliegt.

Des Weiteren umfasst die Schaltung 1 eine Signalschalteinheit 11, welche sechs Anschlussports 13 aufweist, wobei jeder Anschlussport 13 mit jeweils einem der internen Sendeportanschlüsse T_{A}, T_{B}, T_{C} oder mit jeweils einem der internen Empfangsportanschlüsse R_{A}, R_{B}, R_{C} der Aufnahmeeinrichtungen A, B, C verbunden ist.

Die Signalschalteinheit 11 ist so ausgebildet, dass mittels eines Ansteuersignals S_{c} die Konfiguration der Schaltung 1 festgelegt werden kann. Das Ansteuersignal S_{c} kann dabei der Schaltung von einer externen Steuereinheit (nicht dargestellt) zugeführt werden oder aber von einer von der Schaltung 1 umfassten Steuereinheit (ebenfalls nicht dargestellt) erzeugt werden. Das Ansteuersignal S_{c} kann beispielsweise auch durch die Verwendung von Brücken, Jumpern oder Schaltern oder dergleichen erzeugt werden.

Mittels des Ansteuersignals S_{c} kann die Signalschalteinheit 11 so angesteuert werden, dass für jeden der internen Empfangsportanschlüsse R_{A}, R_{B}, R_{C} festgelegt werden kann, ob und mit welchem ausgewählten internen Sendeportanschluss T_{A}, T_{B}, T_{C} oder mit welchen mehreren ausgewählten internen Sendeportanschlüssen T_{A}, T_{B}, T_{C} der betreffende interne Empfangsportanschluss R_{A}, R_{B}, R_{C} verbunden ist. Auf diese Weise kann die Konfiguration der Karte an den jeweiligen Einsatzzweck angepasst werden.

In der in Fig. 1 dargestellten Ausführungsform der Schaltung 1 ist die Signalschalteinheit 11 mittels dreier, in spezieller Weise verschalteter Vierport-Schalteinheiten 15, 17, 19 realisiert, die in Fig. 1 auch mit der Bezeichnung SCP für "Signal Cross Points" bezeichnet sind.

Ein erster interner Port 19a der Vierport-Schalteinheit 19 ist mit einem ersten internen Port 15a der zweiten Vierport-Schalteinheit 15 verbunden. Ein zweiter interner Port 19b der Vierport-Schalteinheit 19 ist mit einem ersten internen Port 17a der Vierport-Schalteinheit 17 verbunden. Ein zweiter interner Port 15b der Vierport-Schalteinheit 15 ist mit einem zweiten internen Port 17b der Vierport-Schalteinheit 17 verbunden.

Wie aus Fig. 1 ersichtlich, sind die Anschlussports 13 der Schalteinheit 11 durch externe Ports 15c, 15d, 17c, 17d, 19c, 19d der Vierport-Schalteinheiten 15, 17, 19 gebildet bzw. mit diesen verbunden. Dabei ist der externe Port 15c der Vierport-Schalteinheit 15 (mittelbar über den Takt- und Datenaufbereitungsschaltkreis 9) mit dem Sendeportanschluss T_{A} der Aufnahmeeinrichtung A verbunden. In gleicher Weise ist der weitere externe Port 15d der Vierport-Schalteinheit 15 (mittelbar über den Takt- und Datenaufbereitungsschaltkreis 9) mit dem Sendeportanschluss T_{B} der Aufnahmeeinrichtung 5 verbunden.

Der Empfangsportanschluss R_{A} der Aufnahmeeinrichtung A ist mit einem externen Port 17c der Vierport-Schalteinheit 17 verbunden und der Empfangsportanschluss der Aufnahmeeinrichtung B mit dem weiteren externen Port 17d der Vierport-Schalteinheit 17. Der externe Port 19c der Vierport-Schalteinheit 19 ist (mittelbar über den betreffenden Takt- und Datenaufbereitungsschaltkreis 9) mit dem Sendeportanschluss T_{C} der Aufnahmeinrichtung C verbunden, deren Empfangsportanschluss R_{C} mit dem anderen externen Port 19d der Vierport-Schalteinheit 19 verbunden ist.

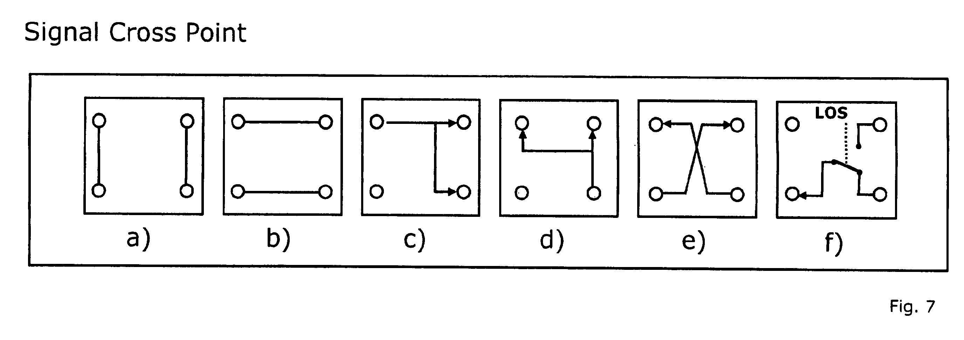

Die einzelnen Vierport-Schalteinheiten 15, 17, 19 können vorzugsweise so ausgebildet sein, dass sie die in Fig. 7 dargestellten Schaltstellungen annehmen können. Hierzu kann das Ansteuersignal S_{c} der Signalschalteinheit 11 selbstverständlich auch jeder einzelnen Vierport-Schalteinheit zugeführt sein oder aber in entsprechende Teil-Ansteuersignale aufgespalten sein. Jedes Teil-Ansteuersignal kann selbstverständlich seinerseits auch mittels entsprechender Einrichtungen wie Schalter, Jumper, Brücken oder dergleichen erzeugt werden, welche jeweils der betreffenden Vierport-Schalteinheit zugeordnet sind. Aus Gründen der Einfachheit wurde bei den in Fig. 7 in den Teildarstellungen a) bis f) dargestellten Schaltstellungen für die Vierport-Schalteinheiten 15, 17, 19 die Bezeichnung der internen und externen Anschlussports weggelassen. Die Schaltstellungen sind jedoch so zu verstehen, dass jeweils die linken Ports in den Fig. 7a) den linken Ports der Vierport-Schalteinheiten 15, 17, 19 in Fig. 1 entsprechen und die rechen Ports der Schaltstellungen in den Fig. 7a) bis f) den rechten Ports der Vierport-Schalteinheiten 15, 17, 19 in Fig. 1.

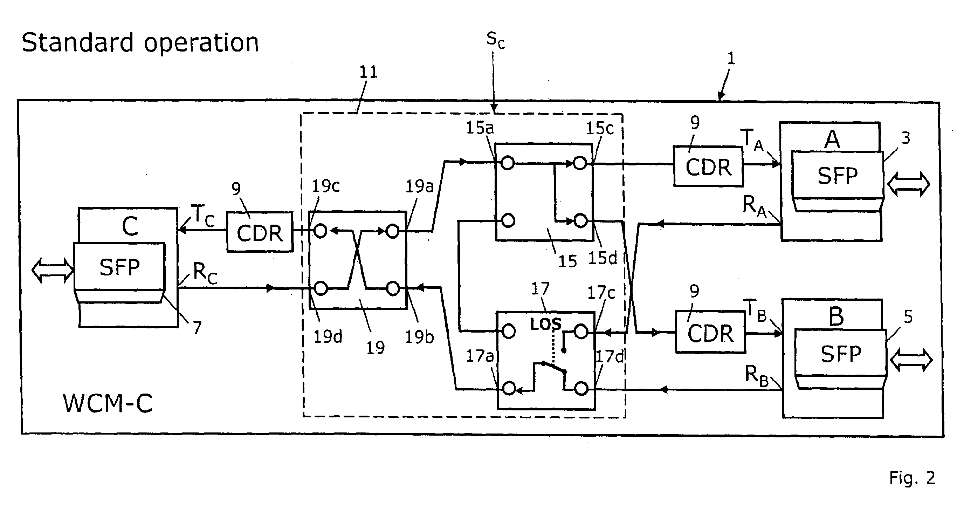

Im Folgenden werden ausgewählte, in der Praxis bedeutsame Konfigurationen der Schaltung 1 anhand der in den Fig. 2 bis Fig. 6 dargestellten Konfigurationen näher erläutert:
Zunächst sei darauf hingewiesen, dass die Fig. 2 bis Fig. 6 identisch die bereits in Fig. 1 dargestellte und vorstehend erläuterte Schaltung 1 zeigen, wobei lediglich zusätzlich bestimmte Schaltstellungen der Vierport-Schalteinheiten 15, 17, 19 für die jeweilige Konfiguration eingezeichnet sind.

Fig. 2 zeigt eine Konfiguration für einen möglichen Standardbetrieb der Schaltung 1. In dieser Betriebsart ermöglicht die Schaltung 1 eine bi-direktionale Verkehrsbeziehung für einen bestimmten Kanal, dessen Signal im Normalfall mittels der Transceivereinheiten 3 und 7, welche in den Aufnahmeinrichtungen A und C aufgenommen sind von der Local-Seite an die Remote-Seite der Schaltung 1 übertragen wird bzw. umgekehrt. Der Übertragungskanal kann beispielsweise durch ein Kanalsignal eines CWDM- oder DWDM-Signals auf der Remote-Seite der Schaltung 1 repräsentiert sein.

In einem solch optischen Netzwerk sind die Transceivereinheiten 3, 5, 7 selbstverständlich als optisch-elektrische bzw. elektrisch-optische Wandler ausgebildet.

In der in Fig. 2 dargestellten Konfiguration wird das der Transceivereinheit 3 zugeführte optische Kanalsignal optisch-elektrisch gewandelt und liegt dann als elektrisches Signal am Empfangsportanschluss R_{A} der Aufnahmeeinrichtung A an.

Gemäß der in Fig. 2 dargestellten Schaltstellung der Vierport-Schalteinheit 17 wird das Empfangssignal, welches dem Port 17c der Vierport-Schalteinheit 17 zugeführt wird, über den Port 17a dem Port 19b der Vierport-Schalteinheit 19 zugeführt. Die Vierport-Schalteinheit 19 weist die in Fig. 2 dargestellte gekreuzte Schaltstellung auf, so dass das Empfangssignal über den Port 19c und den Takt- und Datenaufbereitungsschaltkreis 9 dem Sendeportanschluss T_{c} der Aufnahmeeinrichtung C zugeführt wird. Das Empfangssignal wird dann mittels der Transceivereinheit 7 elektrisch-optisch gewandelt und als Empfangssignal an die Local-Seite der Schaltung 1 abgegeben. Die optische Wellenlänge des an die Local-Seite abgegebenen Signals kann sich dabei von der Wellenlänge des remote-seitig empfangenen optischen Kanalsignals unterscheiden. Ebenso kann an der Local-Seite ein anderer Lichtwellenleitertyp eingesetzt werden als an der Remote-Seite.

Ein von der Local-Seite an die Remote-Seite der Schaltung 1 zu übertragendes Signal wird zunächst von der Transceivereinheit 7 optisch-elektrisch gewandelt und über den Empfangsanschlussport R_{c} dem Port 19d der Vierport-Schalteinheit 19 zugeführt. Infolge der gekreuzten Schaltstellung der Vierport-Schalteinheit 19 wird das Empfangssignal über den Port 19a dem Port 15a der Vierport-Schalteinheit 15 zugeführt. Durch die splittende Schaltstellung der Vierport-Schalteinheit 15 wird dieses Signal zum einen über den Port 15c und den Takt- und Datenaufbereitungsschaltkreis 9 dem Sendeanschlussport T_{A} der Aufnahmeeinrichtung A zugeführt und zum anderen über den Port 15d und den betreffenden Takt- und Datenaufbereitungsschaltkreis 9 dem Sendeanschlussport T_{B} der Aufnahmeeinrichtung B. Die Transceivereinheiten 3 bzw. 5 wandeln dieses Signal elektrisch-optisch und führen es jeweils der Remote-Seite, beispielsweise jeweils einem separaten Lichtwellenleiter der Remote-Seite zu. Die Wellenlängen dieser beiden optischen Sendesignale können identisch oder auch voneinander verschieden sein.

In diesem Fall dient der Signalpfad über die Transceivereinheit 5 als Protection-Pfad, so dass der jeweils empfangende Netzwerkknoten bei Ausfall der Übertragungsstrecke, welche mit der Transceivereinheit 3 verbunden ist, das identische Signal über den Protection-Pfad empfangen, welcher mit der Transceivereinheit 5 verbunden ist.

Die Vierport-Schalteinheit 17 ist in diesem Fall so ausgebildet, dass diese einen Schalter aufweist, der in der normalen Betriebsweise die in Fig. 2 dargestellte Schaltstellung besitzt. Wird für das Signal, welches der Vierport-Schalteinheit 17 über den Port 17c zugeführt ist, ein "Loss-of-Signal" detektiert, was beispielsweise dann der Fall ist, wenn die Übertragungsstrecke, die mit der Transceivereinheit 3 verbunden ist, unterbrochen wird, so wird der in der Vierport-Schalteinheit 17 realisierte Schalter in die andere Schaltstellung überführt. In dieser Schaltstellung verbindet die Vierport-Schalteinheit 17 die Ports 17d und 17a, so dass das am Empfangsanschlussport R_{B} der Aufnahmeeinrichtung B anliegende Protection-Signal in der vorstehend beschriebenen Weise an die Local-Seite der Schaltung 1 übertragen wird. Die Verkehrsbeziehung wird in diesem Protection-Fall über die Transceivereinheit 5 aufrecht erhalten. Das Detektieren des "Loss-of-Signal" kann durch die Vierport-Schalteinheit 17 selbst erfolgen oder aber durch zusätzliche Einrichtungen, die ein entsprechendes Ansteuersignal an die Vierport-Schalteinheit 17 abgeben.

Selbstverständlich kann bei der in Fig. 2 dargestellten Ausführungsform auch auf die Transceivereinheit 5 verzichtet werden, wenn kein Protection-Mechanismus erforderlich ist. In diesem Fall wird lediglich ein Kanalsignal zwischen den Transceivereinheiten 3 und 7 übertragen. In diesem Fall können die Vierport-Schalteinheiten grundsätzlich dieselben Schaltstellungen bzw. Funktionen realisieren. Es ist jedoch ebenfalls möglich, die Vierport-Schalteinheit 15 so anzusteuern, dass diese lediglich die Ports 15a und 15c verbindet, wobei auf die Split-Funktion verzichtet wird. Die Vierport-Schalteinheit 17 kann vereinfacht so angesteuert werden, dass lediglich die Ports 17c und 17a verbunden sind. Eine Schaltfunktion ist in diesem vereinfachten Fall nicht möglich.

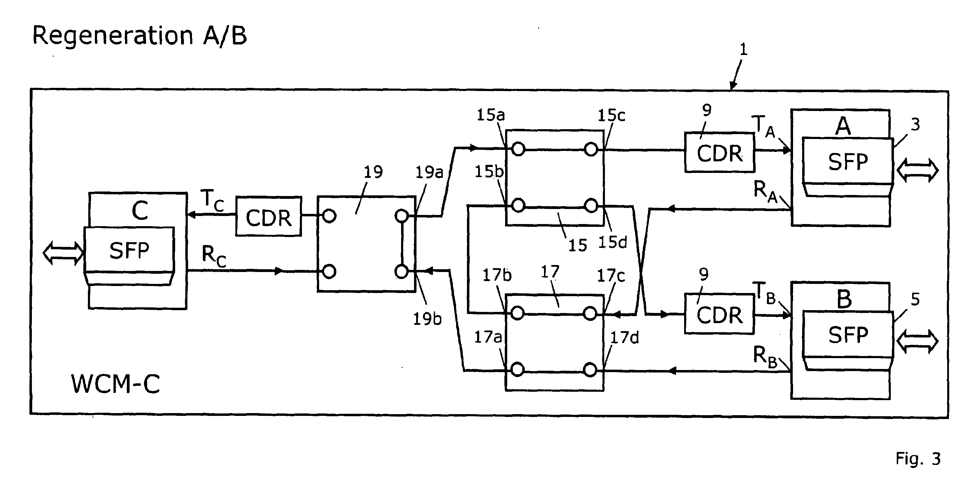

Bei der in Fig. 3 dargestellten Konfiguration der Schaltung 1 wird lediglich eine Regeneration und/oder Wellenlängenumsetzung des jeweils zugeführten optischen Signals durchgeführt. Das der Transceivereinheit 3 zugeführte optische Signal wird optisch-elektrisch gewandelt und über den Empfangsanschlussport R_{A} dem Port 17c der Vierport-Schalteinheit 17 zugeführt. Diese ist so angesteuert, dass der Port 17c mit dem Port 17b verbunden ist, so dass das Signal dem Port 15b der Vierport-Schalteinheit 15 zugeführt wird. Da die Vierport-Schalteinheit 15 so angesteuert ist, dass der Port 15b mit dem Port 15d verbunden ist, wird das Signal über den Takt- und Datenaufbereitungsschaltkreis 9 dem Sendeportanschluss T_{B} der Aufnahmeeinrichtung B zugeführt und mittels der Transceivereinheit 5 elektrisch-optisch gewandelt und wieder der Remote-Seite zugeführt. Auf diesem Signalweg kann somit bei der Verwendung von Transceivereinheiten 3, 5 mit unterschiedlichen Wellenlängen eine Wellenlängenumsetzung des Signals erreicht werden. Zusätzlich kann auch mittels des Takt- und Datenaufbereitungsschaltkreises 9 eine Signalregenerierung vorgenommen werden. Unterscheiden sich die Wellenlängen der Transceivereinheiten 3 und 5 nicht, so wird lediglich eine Signalregenerierung vorgenommen.

In der Gegenrichtung wird das betreffende optische Signal der Transceivereinheit 5 zugeführt und optisch-elektrisch gewandelt. Das Signal gelangt über den Empfangsanschlussport R_{B} der Aufnahmeeinrichtung B an den Port 17d der Vierport-Schalteinheit 17. Dieser Port ist in der in Fig. 3 dargestellten Schaltstellung mit dem Port 17a verbunden. Das Signal gelangt somit über den Port 17a an den Port 19b der Vierport-Schalteinheit 19, welche so angesteuert ist, dass der Port 19b mit dem Port 19a verbunden ist. Das Signal gelangt somit über den Port 19a an den Port 15a der Vierport-Schalteinheit 15. Diese Vierport-Schalteinheit ist so angesteuert, dass der Port 15a mit dem Port 15c verbunden ist. Das Signal gelangt somit vom Port 15c über den Takt- und Datenaufbereitungsschaltkreis 9 an den Sendeanschlussport T_{A} der Aufnahmeeinrichtung A. Das Signal wird von der Transceivereinheit 3 elektrisch-optisch gewandelt und der Remote-Seite der Schaltung 1 zugeführt. Auch in diesem Signalweg kann somit eine Signalregenerierung und/oder eine Wellenlängenumsetzung erfolgen. Da bei einer reinen Regeneration und/oder Wellenlängenumsetzung des remote-seitigen Signal keine local-seitige Transceivereinheit erforderlich ist, kann bei der in Fig. 3 dargestellten Konfiguration die Aufnahmeeinrichtung C selbstverständlich auch unbestückt bleiben.

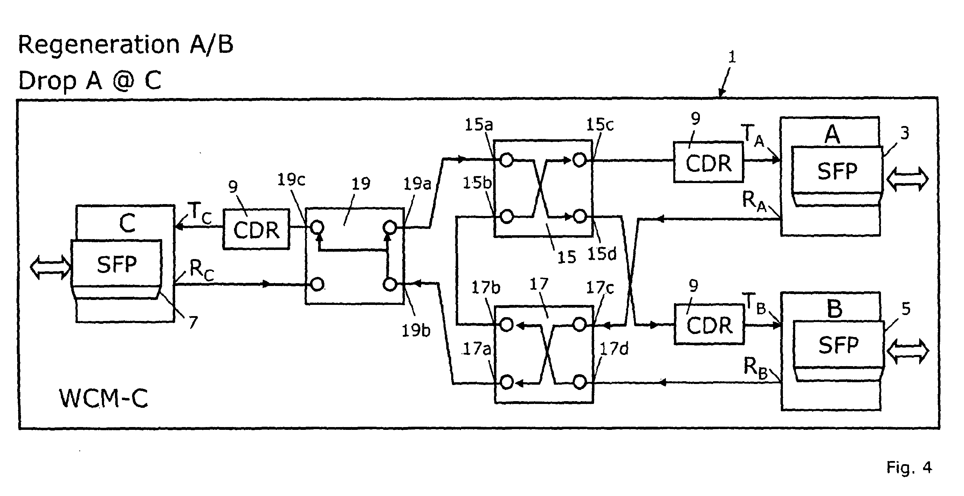

Die in Fig. 4 dargestellte Konfiguration der Schaltung 1 ist hinsichtlich der Schaltstellungen bzw. Ansteuerungen der Vierport-Schalteinheiten 15 und 17 mit der Konfiguration nach Fig. 3 identisch. Auch in der Konfiguration gemäß Fig. 4 kann eine Signalregenerierung und/oder eine Wellenlängenumsetzung erfolgen. Insofern sei auf die Ausführungen zu Fig. 3 verwiesen.

Anders als in Fig. 3 ist die Vierport-Schalteinheit 19 bei der Konfiguration nach Fig. 4 zusätzlich so angesteuert bzw. geschaltet, dass auch eine Split-Funktion hinsichtlich des von der Transceivereinheit 3 empfangenen Signals gegeben ist. Hierzu ist der Port 19c der Vierport-Schalteinheit 19 zusätzlich mit den Ports 19a, 19b verbunden. Das Empfangssignal wird somit über den Port 19c und den Takt- und Datenaufbereitungsschaltkreis 9 dem Sendeportanschluss T_{C} der Aufnahmeeinrichtung C zugeführt. Die darin aufgenommene Transceivereinheit 7 wandelt dieses Signal elektrisch-optisch und führt dieses Signal der Local-Seite der Schaltung 1 zu.

Die Transceivereinheit 7 kann dabei lediglich als Sendeeinheit ausgebildet sein, da diese zur Realisierung der in Fig. 4 dargestellten Konfiguration nicht in der Lage sein muss, ein Signal von der Local-Seite her zu empfangen und an die Remote-Seite der Schaltung 1 zu übertragen.

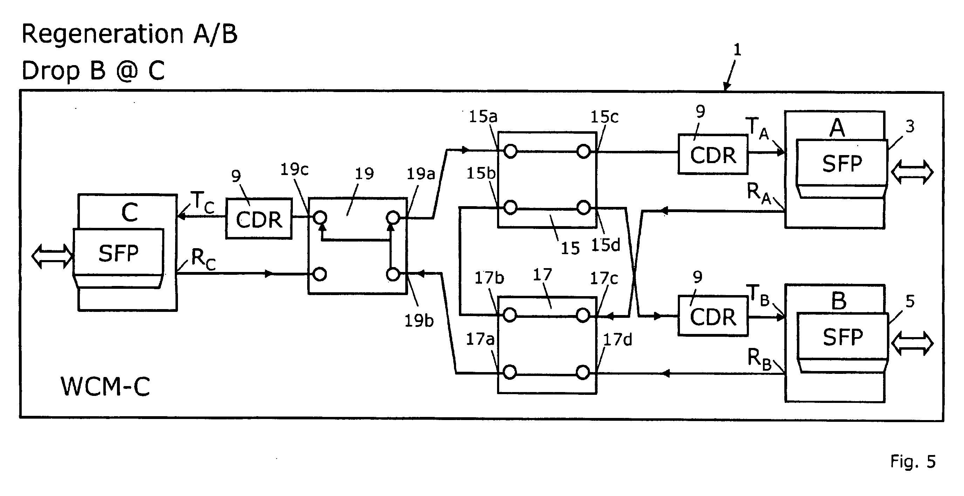

Die in Fig. 5 dargestellte Konfiguration unterscheidet sich von der in Fig. 4 dargestellten Konfiguration dadurch, dass die Vierport-Schalteinheiten 15 bzw. 17 nicht in eine gekreuzte Schaltstellung sondern eine durchgeschleifte Schaltstellung gesteuert sind, in der die Ports 15a und 15c, 15b und 15d, 17b und 17c, 17a und 17d verbunden sind. Im Unterschied zur Konfiguration nach Fig. 4 wird hierdurch nicht das von der Transceivereinheit 3 empfangene Signal an die Local-Seite der Schaltung 1 übertragen, sondern das von der Transceivereinheit 5 empfangene Signal. Im Übrigen treffen auf diese Schaltungen die vorstehenden Ausführungen im Zusammenhang mit der Konfiguration nach Fig. 4 analog zu.

Die Ausführungsformen der Konfigurationen nach den Fig. 4 und 5 ermöglichen beispielsweise die Übertragung eines Broadcast-Signals, wie eines TV-Signals, in einem Netzwerk, wobei das Signal im betreffenden Netzwerkknoten nicht nur gedroppt, sondern auch zum nächsten Netzwerkknoten durchgeschleift wird. Gleichzeitig kann eine Signalregeneration erfolgen.

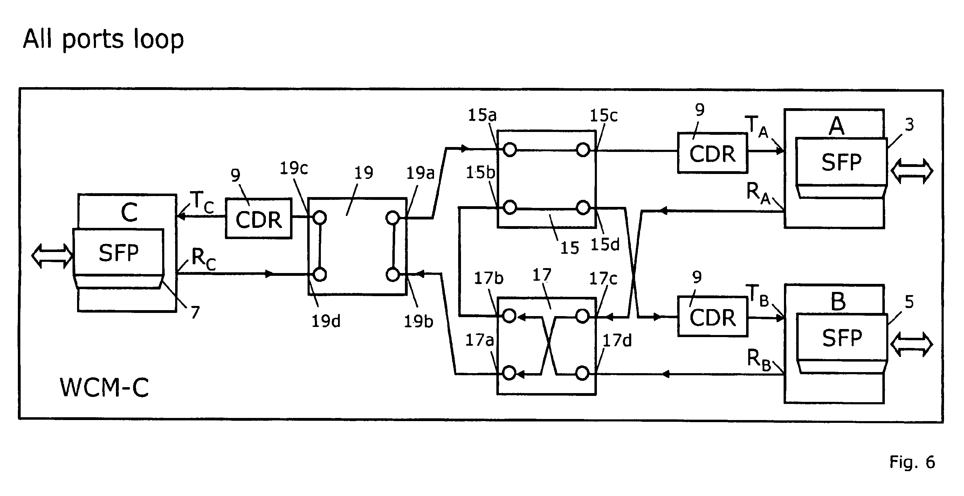

Die in Fig. 6 dargestellte Konfiguration wird im Normalfall lediglich zu Servicezwecken eingesetzt werden. Da die Vierport-Schalteinheiten 15, 17 und 19 so angesteuert sind, dass jeweils die Ports 15a und 15c, 15b und 15c, 17b und 17d, 17a und 17c, 19a und 19b sowie 19c und 19d verbunden sind, ist jeder Empfangsportanschluss R_{A}, R_{B}, R_{c} mit dem zugehörigen Sendeportanschluss T_{A}, T_{B}, T_{C} verbunden, so dass das Signal jeweils von der betreffenden Transceivereinheit 3, 5, 7 jeweils wieder auf diese selbst zurückgeschleift wird. Diese Konfiguration ermöglicht beispielsweise das Prüfen der zugehörigen Übertragungsstrecke von einem entfernten Punkt aus. Selbstverständlich kann diese Konfiguration jedoch auch in solchen Fällen verwendet werden, wenn ein an einer Transceivereinheit anliegendes Empfangssignal lediglich regeneriert und in dieselbe Richtung wieder zurückgesendet werden soll.

Neben den in den Fig. 2 bis Fig. 6 dargestellten ausgewählten Konfigurationen ermöglichen weitere unterschiedliche Schaltstellungen der Vierport-Schalteinheiten 15, 17, 19 selbstverständlich auch weiter gehende Konfigurationen. Die Schaltung 1 muss dabei nur so angesteuert werden, dass die Vierport-Schalteinheiten 15, 17, 19 die gewünschten Schaltstellungen aufweisen. Die Konfiguration kann dabei im Extremfalls sogar während des Betriebs der Schaltung 1 geändert werden.

Durch das Vorsehen der Aufnahmeeinrichtungen A, B, C ergibt sich der Vorteil, dass die Schaltung 1 bzw. die betreffende Kanalkarte frei mit solchen Transceivereinheiten 3, 5, 7 bestückt werden kann, die für die jeweilige Konfiguration bzw. den jeweiligen Einsatzzweck geeignet sind. Selbstverständlich müssen nur solche Aufnahmeeinrichtungen A, B, C mit einer entsprechenden Transceivereinheit 3, 5, 7 bestückt werden, die für die jeweilige Konfiguration zwingend erforderlich sind.

## Patentansprüche

1. Schaltung zur Signalübertragung in einem Netzwerkknoten, insbesondere für eine Kanalkarte für eine optische WDM-Signalübertragungseinrichtung,
a) mit einer der Local-Seite eines Netzwerkknotens zugeordneten ersten Aufnahmeeinrichtung (C), welche mittels einer local-seitigen Transceivereinheit (7) frei bestückbar ist und welche einen internen Sendeportanschluss (T_{C}) und einen internen Empfangsportanschluss (R_{c}) aufweist, die bei einer Bestückung der ersten Aufnahmeeinrichtung (C) mit einer local-seitigen Transceivereinheit (7) mit den betreffenden Sende- oder Empfangsports der local-seitigen Transceivereinheit (7) verbunden sind,
b) mit zwei weiteren, der Remote-Seite des Netzwerkknotens zugeordneten Aufnahmeeinrichtungen (A, B), welche mittels jeweils einer remote-seitigen Transceivereinheit (3, 5) frei bestückbar sind und welche jeweils einen internen Sendeportanschluss (T_{A}, T_{B}) und einen internen Empfangsportanschluss (R_{A}, R_{B}) aufweisen, die bei einer Bestückung der betreffenden weiteren Aufnahmeeinrichtung mit einer remote-seitigen Transceivereinheit (3, 5) mit den betreffenden Ports der remote-seitigen Transceivereinheit (3, 5) verbunden sind,
c) mit einer Signalschalteinheit (11), welche sechs Anschlussports (13) aufweist, wobei jeder Anschlussport (13) mit jeweils einem der internen Sendeportanschlüsse (T_{A}, T_{B}, T_{C}) oder Empfangsportanschlüsse (R_{A}, R_{B}, R_{c}) der ersten Aufnahmeeinrichtung (C) oder der beiden weiteren Aufnahmeeinrichtung (A, B) verbunden sind, und
d) wobei die Signalschalteinheit (11) derart ansteuerbar ist, dass für jeden der internen Empfangsportanschlüsse (R_{A}, R_{B}, R_{C}) festgelegt wird, ob und mit welchem ausgewählten internen Sendeportanschluss (T_{A}, T_{B}, T_{c}) oder mit welchen mehreren ausgewählten internen Sendeportanschlüssen (T_{A}, T_{B}, T_{c}) der betreffende interne Empfangsportanschluss (R_{A}, R_{B}, R_{C}) verbunden ist,
e) und **dadurch gekennezeichnet**, dass die Signalschalteinheit (11) aus drei Vierport-Schalteinheiten (15, 17, 19) mit jeweils zwei internen Ports (15a, 15b; 17a, 17b; 19a, 19b) zur Verbindung der Vierport-Schalteinheiten (15, 17, 19) untereinander und jeweils zwei, die sechs Anschlussports (13) realisierenden externen Ports (15c, 15d; 17c, 17d; 19c, 19d) besteht,

2. Schaltung nach Anspruch 1, **dadurch gekennzeichnet, dass** die Signalschalteinheit (11) so ansteuerbar ist, dass der interne Empfangsportanschluss (R_{A}, R_{B}) einer ausgewählten remote-seitigen Aufnahmeeinrichtung (A, B) mit dem Sendeportanschluss (T_{c}) der local-seitigen Aufnahmeeinrichtung (C) verbunden ist und der interne Empfangsportanschluss (R_{C}) der local-seitigen Aufnahmeeinrichtung (C) mit dem Sendeportanschluss (T_{A}, T_{B}) der ausgewählten remote-seitigen Aufnahmeeinrichtung (A, B).

3. Schaltung nach Anspruch 2, **dadurch gekennzeichnet, dass** die Signalschalteinheit (11) zur Realisierung einer Protection-Funktion so ansteuerbar ist, dass der interne Empfangsportanschluss (R_{c}) der local-seitigen Aufnahmeeinrichtung (C) mit dem Sendeportanschluss (T_{B}, T_{A}) der zweiten, nicht ausgewählten, remote-seitigen Aufnahmeeinrichtung (B, A) verbunden ist.

4. Schaltung nach Anspruch 3, **dadurch gekennzeichnet, dass** die Signalschalteinheit (11) so ansteuerbar ist, dass der im Normalbetrieb in der Signalschalteinheit (11) offen terminierte interne Empfangsportanschluss (R_{B}, R_{A}) der zweiten, nicht ausgewählten, remote-seitigen Aufnahmeeinrichtung (B, A) im Protection-Betrieb mit dem Sendeportanschluss (T_{c}) der local-seitigen Aufnahmeeinrichtung (C) verbunden ist, wobei vorzugsweise dann vom Normalbetrieb in den Protection-Betrieb umgeschaltet wird, wenn am internen Empfangsportanschluss (R_{A}) der ausgewählten remote-seitigen Aufnahmeeinrichtung (A) kein Signal mehr detektierbar ist (Loss Of Signal).

5. Schaltung nach einem der vorhergehenden Ansprüche, **dadurch gekennzeichnet, dass** die Signalschalteinheit (11) zur Realisierung einer Drop-and-Continue-Funktion so ansteuerbar ist, dass der interne Empfangsportanschluss (R_{A}, R_{B}) einer ausgewählten remote-seitigen Aufnahmeeinrichtung (A, B) mit dem Sendeportanschluss (T_{c}) der local-seitigen Aufnahmeeinrichtung (C) verbunden ist und gleichzeitig mit dem Sendeportanschluss (T_{B}, T_{c}) der nicht ausgewählten, remote-seitigen Aufnahmeeinrichtung (B, A), wobei vorzugsweise jede der remote-seitigen Aufnahmeeinrichtungen (A, B) zur Realisierung dieser Drop-and-Continue-Schaltfunktion auswählbar ist.

6. Schaltung nach einem der vorhergehenden Ansprüche, **dadurch gekennzeichnet, dass** die Signalschalteinheit (11) zur Realisierung einer Regenerations- und/oder Konversions-Funktion bezüglich eines remote-seitigen Signals so ansteuerbar ist, dass der interne Empfangsportanschluss (R_{A}, R_{B}) einer ausgewählten remote-seitigen Aufnahmeeinrichtung (A, B) mit dem Sendeportanschluss (T_{B}, T_{A}) der nicht ausgewählten, remote-seitigen Aufnahmeeinrichtung (B, A) verbunden ist und vorzugsweise auch der interne Empfangsportanschluss (R_{B}, R_{A}) der nicht ausgewählten, remote-seitigen Aufnahmeeinrichtung (B, A) mit dem Sendeportanschluss (T_{A}, T_{B}) der ausgewählten, remote-seitigen Aufnahmeeinrichtung (A, B).

7. Schaltung nach einem der vorhergehenden Ansprüche, **dadurch gekennzeichnet, dass** die Signalschalteinheit (11) zur Realisierung einer Loop-Funktion so ansteuerbar ist, dass der interne Empfangsportanschluss (R_{A}, R_{B}, R_{c}) einer, mehrerer oder aller Aufnahmeeinrichtungen (A, B, C) mit dem Sendeportanschluss (T_{A}, T_{B}, T_{c}) der jeweils selben Aufnahmeeinrichtung (A, B, C) verbunden ist.

8. Schaltung nach einem der vorhergehenden Ansprüche, **dadurch gekennzeichnet, dass** ein erster interner Port (19a) der ersten Vierport-Schalteinheit (19) mit einem ersten internen Port (15a) der zweiten Vierport-Schalteinheit (15) verbunden ist und ein zweiter interner Port (19b) der ersten Vierport-Schalteinheit (19) mit einem ersten internen Port (17a) der dritten Vierport-Schalteinheit (17), dass ein zweiter interner Port (15b) der zweiten Vierport-Schalteinheit (15) mit einem zweiten internen Port (17b) der dritten Vierport-Schalteinheit (17) verbunden ist, dass der Empfangsportanschluss (R_{c}) der local-seitigen Aufnahmeeinrichtung (C) mit einem ersten externen Port (19d) der ersten Vierport-Schalteinheit (19) verbunden ist und der Sendeportanschluss (T_{C}) der local-seitigen Aufnahmeeinrichtung (C) mittelbar oder unmittelbar mit einem zweiten externen Port (19c) der ersten Vierport-Schalteinheit (19d), und dass die Sendeportanschlüsse (T_{A}, T_{B}) der beiden remote-seitigen Aufnahmeeinrichtungen (A, B) mittelbar oder unmittelbar mit jeweils einem externen Port (15c, 15d) der zweiten Vierport-Schalteinheit (15) verbunden sind und die Empfangsportanschlüsse (R_{A}, R_{B}) der beiden remote-seitigen Aufnahmeeinrichtungen (A, B) mit jeweils einem externen Port (17c, 17d) der dritten Vierport-Schalteinheit (17).

9. Schaltung nach einem der vorhergehenden Ansprüche, **dadurch gekennzeichnet, dass** die Vierport-Schalteinheiten (15, 17, 19) identisch ausgebildet sind.

10. Schaltung nach Anspruch 9, **dadurch gekennzeichnet, dass** jede Vierport-Schalteinheit (15, 17, 19) so ansteuerbar ist, dass die Ports (15a-15d; 17a-17d; 19a-19d) in beliebiger Weise miteinander, auch ein Port mit mehreren Ports gleichzeitig, verbunden werden können

11. Schaltung nach Anspruch 9, **dadurch gekennzeichnet, dass** jede Vierport-Schalteinheit (15, 17, 19) in mehrere ausgewählte oder alle der folgenden Schaltstellungen steuerbar ist:
a) Schaltstellung 1: Die beiden internen Ports und/oder die beiden externen Ports sind durchgeschaltet;
b) Schaltstellung 2: Der erste externe Port ist auf den ersten internen Port durchgeschaltet oder umgekehrt und/oder der zweite externe Port ist auf den zweiten internen Port durchgeschaltet oder umgekehrt;
c) Schaltstellung 3: Der erste externe Port ist auf den zweiten internen Port durchgeschaltet oder umgekehrt und/oder der erste interne Port ist auf den zweiten externen Port durchgeschaltet oder umgekehrt;
d) Schaltstellung 4: Entweder der erste oder der zweite interne Port ist gleichzeitig auf den ersten und zweiten externen Port durchgeschaltet;
e) Schaltstellung 5: Einer der internen Ports ist gleichzeitig auf den jeweils anderen Internen Port und einen der externen Ports durchgeschaltet.

12. Schaltung nach einem der vorhergehenden Ansprüche, **dadurch gekennzeichnet, dass** abhängig vom Einsatzzweck der Schaltung (1) wenigstens zwei der Aufnahmeeinrichtungen (A, B, C) mit für den jeweiligen Einsatzzweck geeigneten Transceivern (3, 5, 7) bestückt sind.

13. Schaltung nach einem der vorhergehenden Ansprüche, **dadurch gekennzeichnet, dass** im Signalpfad unmittelbar vor dem Sendeportanschluss (T_{A}; T_{B}, T_{C}) einer, mehrerer oder aller Aufnahmeeinrichtungen (A, B, C) ein Takt- und Daten-Aufbereitungsschaltkreis (9) angeordnet ist.

14. Schaltung nach Anspruch 13, **dadurch gekennzeichnet, dass** der Takt- und Daten-Aufbereitungsschaltkreis (9) einen breitbandigen Phase-Locked-Loop Schaltkreis umfasst, der in der Lage ist, in einem breitbandigen Bitratenbereich auf den Takt des ihm zugeführten Signals einzurasten und die jeweilige Bitrate zu ermitteln, und dass eine Steuereinheit vorgesehen ist, der die ermittelte Bitrate zugeführt wird, wobei die Steuereinheit die Bitrate mit gespeicherten Werten für Arbeitsbitraten vergleicht, für die die Schaltung spezifiziert ist, und wobei der Signalpfad blockiert wird, wenn die ermittelte Bitrate um mehr als einen vorgegebenen Betrag von allen Arbeitsbitraten abweicht.

## Claims

1. Circuit for signal transmission in a network node, in particular for a channel card for an optical WDM signal transmission means,
a) with a first receiving means (C) which is assigned to the local side of a network node, can be equipped freely via a local-side transceiver unit (7), and has an internal output port connection (T_{C}) and an internal input port connection (R_{C}), which are connected, when the first receiving means (C) is equipped with a local-side transceiver unit (7), to the relevant output or input port of the local-side transceiver unit (7),
b) with two further receiving means (A, B) which are assigned to the remote side of the network node, can each be equipped freely by a respective remote-side transceiver unit (3, 5), and each have an internal output port connection (T_{A}, T_{B}) and an internal input port connection (R_{A}, R_{B}), which are connected, when the relevant further receiving means is equipped with a remote-side transceiver unit (3, 5), to the relevant port of the remote-side transceiver unit (3, 5),
c) with a signal switch unit (11) which has six connection ports (13), each connection port (13) being connected to a respective one of the internal output port connections (T_{A}, T_{B}, T_{C}) or input port connections (R_{A}, R_{B}, R_{C}) of the first receiving means (C) or of the two further receiving means (A, B), and
d) the signal switch unit (11) being able to be actuated in such a way that for each of the internal input port connections (R_{A}, R_{B}, R_{C}), it is determined whether, and to which selected internal output port connection (T_{A}, T_{B}, T_{C}) or to which plurality of selected internal output port connections (T_{A,} T_{B}, T_{C}), the relevant internal input port connection (R_{A}, R_{B}, R_{C}) is connected,
e) and **characterised in that** the signal switch unit (11) consists of three four-port switch units (15, 17, 19), each with two internal ports (15a, 15b; 17a, 17b; 19a, 19b) for connection of the four-port switch units (15, 17, 19) to one another and each with two external ports (15c, 15d; 17c, 17d; 19c, 19d) which realise the six connection ports (13).

2. Circuit according to claim 1, **characterised in that** the signal switch unit (11) can be actuated in such a way that the internal input port connection (R_{A}, R_{B}) of a selected remote-side receiving means (A, B) is connected to the output connection (T_{C}) of the local-side receiving means (C), and the internal input port connection (R_{C}) of the local-side receiving means (C) is connected to the output port connection (T_{A}, T_{B}) of the selected remote-side receiving means (A, B).

3. Circuit according to claim 2, **characterised in that** the signal switch unit (11) can be actuated to carry out a protection function in such a way that the internal input port connection (R_{C}) of the local-side receiving means (C) is connected to the output port connection (T_{B}, T_{A}) of the second, unselected remote-side receiving means (B, A).

4. Circuit according to claim 3, **characterised in that** the signal switch unit (11) can be actuated in such a way that the internal input port connection (R_{B}, R_{A}), which in normal operation is open-ended in the signal switch unit (11), of the second, unselected remote-side receiving means (B, A) is connected to the output port connection (T_{C}) of the local-side receiving means (C) during protection operation, a switching from the normal operation to the protection operation preferably taking place when a signal is no longer detected (Loss Of Signal) at the internal input port connection (R_{A}) of the selected remote-side receiving means (A).

5. Circuit according to any one of the preceding claims, **characterised in that** the signal switch unit (11) can be actuated to carry out a drop-and-continue function in such a way that the internal input port connection (R_{A}, R_{B}) of a selected remote-side receiving means (A, B) is connected to the output port connection (T_{C}) of the local-side receiving means (C) and simultaneously to the output port connection (T_{B}, T_{C}) of the unselected remote-side receiving means (B, A), each of the remote-side receiving means (A, B) preferably being selectable for carrying out this drop-and-continue switch function.

6. Circuit according to any one of the preceding claims, **characterised in that** the signal switch unit (11) may be actuated to carry out a regeneration and/or conversion function in relation to a remote-side signal, in such a way that the internal input port connection (R_{A}, R_{B}) of a selected remote-side receiving means (A, B) is connected to the output port connection (T_{B}, T_{A}) of the unselected remote-side receiving means (B, A), and preferably, the internal input port connection (R_{B}, R_{A}) of the unselected remote-side receiving means (B, A) is also connected to the output port connection (T_{A}, T_{B}) of the selected remote-side receiving means (A, B).

7. Circuit according to any one of the preceding claims, **characterised in that** the signal switch unit (11) can be actuated to carry out a loop function in such a way that the internal input port connection (R_{A}, R_{B}, R_{C}) of one, some, or all of the receiving means (A, B, C) is connected to the output port connection (T_{A}, T_{B}, T_{C}) of the same respective receiving means (A, B, C).

8. Circuit according to any one of the preceding claims, **characterised in that** a first internal port (19a) of the first four-port switch unit (19) is connected to a first internal port (15a) of the second four-port switch unit (15), and a second internal port (19b) of the first four-port switch unit (19) is connected to a first internal port (17a) of the third four-port switch unit (17), **in that** a second internal port (15b) of the second four-port switch unit (15) is connected to a second internal port (17b) of the third four-port switch unit (17), **in that** the input port connection (R_{C}) of the local-side receiving means (C) is connected to a first external port (19d) of the first four-port switch unit (19), and the output port connection (T_{C}) of the local-side receiving means (C) is directly or indirectly connected to a second external port (19c) of the first four-port switch unit (19d), and **in that** the output port connections (T_{A}, T_{B}) of the two remote-side receiving means (A, B) are directly or indirectly connected to a respective external port (15c, 15d) of the second four-port switch unit (15), and the input port connections (R_{A}, R_{B}) of the two remote-side receiving means (A, B) are connected to a respective external port (17c, 17d) of the third four-port switch unit (17).

9. Circuit according to any one of the preceding claims, **characterised in that** the four-port switch units (15, 17, 19) are constructed identically.

10. Circuit according to claim 9, **characterised in that** each four-port switch unit (15, 17, 19) can be actuated in such a way that the ports (15a, 15d; 17a, 17d; 19a, 19d) may be connected to one another in any way desired, even one port to a plurality of other ports simultaneously.

11. Circuit according to claim 9, **characterised in that** each four-port switch unit (15, 17, 19) can be controlled in a selected plurality or in all of the following switch arrangements:
a) switch arrangement 1: the two internal ports and/or the two external ports are interconnected;
b) switch arrangement 2: the first external port is interconnected with the first internal port or vice versa and/or the second external port is interconnected with the second internal port or vice versa;
c) switch arrangement 3: the first external port is interconnected with the second internal port or vice versa and/or the second external port is interconnected with the first internal port or vice versa;
d) switch arrangement 4: either the first or the second internal port is simultaneously interconnected with the first and second external port;
e) switch arrangement 5: one of the internal ports is simultaneously interconnected with the respective other internal port and one of the external ports.

12. Circuit according to any one of the preceding claims, **characterised in that** depending on the intended use of the circuit (1), at least two of the receiving means (A, B, C) are equipped with transceivers (3, 5, 7) suitable for the respective intended use.

13. Circuit according to any one of the preceding claims, **characterised in that** a clock and data-preparation circuit (9) is arranged in the signal path immediately before the output port connection (T_{A}; T_{B}; T_{C}) of one, some or all of the receiving means (A, B, C).

14. Circuit according to claim 13, **characterised in that** the clock and data-preparation circuit (9) comprises a broadband phase-locked-loop circuit, which is able to lock on to the cycle of the signal supplied thereto in a broadband bit-rate range and to detect the respective bit-rate, and **in that** a control unit is provided, to which the detected bit-rate is supplied, the control unit comparing the bit-rate with stored values for working bit-rates for which the circuit is specified, and the signal path being blocked if the detected bit-rate differs from all working bit-rates by more than a specified amount.

## Revendications

1. Circuit de transmission de signaux dans un noeud de réseau, en particulier pour une carte de canal pour un dispositif de transmission optique de signaux WDM,
a) comportant un premier dispositif d'enregistrement (C) affecté au côté local d'un noeud de réseau, qui peut être librement équipé d'un émetteur-récepteur (7) côté local et qui présente un raccordement de port émetteur interne (T_{C}) et un raccordement de port récepteur interne (R_{C}) qui, lors d'un équipement du premier dispositif d'enregistrement (C) avec un émetteur-récepteur côté local (7), sont connectés au port émetteur et/ou récepteur concerné de l'émetteur-récepteur côté local (7),
b) comportant deux autres dispositifs d'enregistrement (A, B) affectés au côté distant du noeud de réseau, qui peuvent chacun être librement équipés d'un émetteur-récepteur côté distant (3, 5), et qui présentent chacun un raccordement de port émetteur interne (T_{A}, T_{B}) et un raccordement de port récepteur interne (R_{A}, R_{B}) qui, lors d'un équipement de l'autre dispositif d'enregistrement concerné avec une émetteur-récepteur côté distant (3, 5), sont connectés au port concerné de l'émetteur-récepteur côté distant (3, 5),
c) comportant une unité de commutation de signaux (11) qui présente six ports de raccordement (13), chaque port de raccordement (13) étant raccordé respectivement à un des raccordements de port émetteur internes (T_{A}, T_{B}, T_{C}) ou des raccordements de port récepteur internes (R_{A}, R_{B}, R_{C}) du premier dispositif d'enregistrement (C) ou des deux autres dispositifs d'enregistrement (A, B),
d) l'unité de commutation (11) pouvant être activée de telle manière qu'on détermine pour chaque raccordement de port récepteur interne (R_{A}, R_{B}, R_{C}) s'il est connecté à un raccordement de port émetteur interne (T_{A}, T_{B}, T_{C}) sélectionné et auquel, ou à plusieurs raccordements de port émetteur internes (T_{A}, T_{B}, T_{C}) sélectionnés du raccordement de port récepteur interne (R_{A}, R_{B}, R_{c}) concerné et auxquels,
e) **caractérisé en ce que** l'unité de commutation de signaux (11) comprend trois unités de commutation quatre ports (15, 17, 19) comportant chacune deux ports internes (15a, 15b ; 17a, 17b ; 19a, 19b) pour la connexion des unités de commutation quatre ports (15, 17, 19) les unes avec les autres, et chacune deux ports externes (15c, 15d ; 17c, 17d ; 19c ; 19d) réalisant les six ports de raccordement (13).

2. Circuit selon la revendication 1, **caractérisé en ce que** l'unité de commutation de signaux (11) est activable de telle manière que le raccordement de port récepteur interne (R_{A}, R_{B}) d'un dispositif d'enregistrement côté distant (A, B) sélectionné est connecté au raccordement de port émetteur (T_{C}) du dispositif d'enregistrement côté local (C), et que le raccordement de port récepteur interne (R_{C}) du dispositif d'enregistrement côté local (C) est connecté au raccordement de port émetteur (T_{A}, T_{B}) du dispositif d'enregistrement côté distant (A, B) sélectionné.

3. Circuit selon la revendication 2, **caractérisé en ce que** l'unité de commutation de signaux (11), pour la réalisation d'une fonction de protection, est activable de telle manière que le raccordement de port récepteur interne (R_{C}) du dispositif d'enregistrement côté local (C) est connecté au raccordement de port émetteur (T_{B}, T_{A}) du deuxième dispositif d'enregistrement côté distant (B, A) non sélectionné.

4. Circuit selon la revendication 3, **caractérisé en ce que** l'unité de commutation de signaux (11) est activable de telle manière que le port de raccordement récepteur interne (R_{B}, R_{A}), terminé ouvert en mode normal de l'unité de commutation de signaux (11), du deuxième dispositif d'enregistrement côté distant (B, A) non sélectionné est connecté en mode protection au raccordement de port émetteur (T_{C}) du dispositif d'enregistrement côté local (C), la commutation du mode normal au mode protection se faisant de préférence si aucun signal n'est plus détecté au niveau du raccordement de port récepteur interne (R_{A}) du dispositif d'enregistrement côté distant (A) (loss of signal).

5. Circuit selon une des revendications précédentes, **caractérisé en ce que** l'unité de commutation de signaux (11), pour la réalisation d'une fonction annuler et continuer, est activable de telle manière que le raccordement de port récepteur interne (R_{A}, R_{B}) d'un dispositif d'enregistrement côté distant (A, B) sélectionné est connecté au raccordement de port émetteur (T_{C}) du dispositif d'enregistrement côté local (C) et en même temps au raccordement de port émetteur (T_{B}, T_{C}) du dispositif d'enregistrement côté distant (B, A) non sélectionné, chacun des dispositifs d'enregistrement côté distant (A, B) pouvant de préférence être sélectionné pour la réalisation de cette fonction de commutation annuler et continuer.

6. Circuit selon une des revendications précédentes, **caractérisé en ce que**, pour la réalisation d'une fonction de régénération et/ou conversion par rapport à un signal côté distant, l'unité de commutation de signaux (11) est activable de telle manière que le raccordement de port récepteur interne (R_{A}, R_{B}) d'un dispositif d'enregistrement côté distant (A, B) sélectionné est connecté au raccordement de port émetteur (T_{B}, T_{A}) du dispositif d'enregistrement côté distant (B, A) non sélectionné, et que de préférence le raccordement de port récepteur interne (R_{B}, R_{A}) du dispositif d'enregistrement côté distant (B, A) non sélectionné est également connecté au raccordement de port émetteur (T_{A}, T_{B}) du dispositif d'enregistrement côté distant (A, B) sélectionné.

7. Circuit selon une des revendications précédentes, **caractérisé en ce que**, pour la réalisation d'une fonction boucle, l'unité de commutation de signaux (11) est activable de telle manière que le raccordement de port récepteur interne (R_{A}, R_{B}, R_{C}) d'un, de plusieurs ou de tous les dispositifs d'enregistrement (A, B, C) est connecté au raccordement de port émetteur (T_{A}, T_{B}, T_{C}) de chacun de ces mêmes dispositifs d'enregistrement (A, B, C).

8. Dispositif selon une des revendications précédentes, **caractérisé en ce qu'**un premier port interne (19a) de la première unité de commutation quatre ports (19) est connecté à un premier port interne (15a) de la deuxième unité de commutation quatre ports (15) et un deuxième port interne (19b) de la première unité de commutation quatre ports (19) est connecté à un premier port interne (17a) de la troisième unité de commutation quatre ports (17), **en ce qu'**un deuxième port interne (15b) de la deuxième unité de commutation quatre ports (15) est connecté à un deuxième port interne (17b) de la troisième unité de commutation quatre ports (17), **en ce que** le raccordement de port récepteur (R_{C}) du dispositif d'enregistrement côté local (C) est connecté à un premier port externe (19d) de la première unité de commutation quatre ports (19) et le raccordement de port émetteur (T_{C}) du dispositif d'enregistrement côté local (C) est connecté directement ou indirectement à un deuxième port externe (19c) de la première unité de commutation quatre ports (19d), et **en ce que** chacun des raccordements de port émetteur (T_{A}, T_{B}) des deux dispositifs d'enregistrement côté distant (A, B) connecté directement ou indirectement à un port externe (15c, 15d) de la deuxième unité de commutation quatre ports (15) et les raccordements de port récepteur (R_{A}, R_{B}) des deux dispositifs de réception côté distant A, B) sont chacun raccordés avec un port externe (17c, 17d) de la troisième unité de commutation quatre ports (17).

9. Circuit selon une des revendications précédentes, **caractérisé en ce que** les unités de commutation quatre ports (15, 17, 19) sont réalisées de manière identique.

10. Circuit selon la revendication 9, **caractérisé en ce que** chaque unité de commutation quatre ports (15, 17, 19) est activable de telle manière que les ports (15a, 15d ; 17a, 17d ; 19a, 19d) peuvent être connectés les uns aux autres de n'importe quelle manière, un port pouvant même être connecté simultanément à plusieurs ports.

11. Circuit selon la revendication 9, **caractérisé en ce que** chaque unité de commutation quatre ports (15, 17, 19) peut être commandée en plusieurs positions de commutation ou en toutes parmi les suivantes :
a) Position de commutation 1 : les deux ports internes et/ou les deux ports externes sont connectés directement ;
b) Position de commutation 2 : le premier port externe est connecté directement sur le premier port interne ou inversement et/ou le deuxième port externe est connecté directement sur le deuxième port interne et inversement ;
c) Position de commutation 3 : le premier port externe est connecté directement sur le deuxième port interne ou inversement et/ou le premier port interne est connecté directement sur le deuxième port externe ou inversement ;
d) Position de commutation 4 : soit le premier, soit le deuxième port interne est connecté directement en même temps sur le premier et sur le deuxième port externe ;
e) Position de commutation 5 : un des ports internes est connecté directement en même temps sur chaque autre port interne et sur un des ports externes.

12. Circuit selon une des revendication précédentes, **caractérisé en ce que** selon l'utilisation prévue du circuit (1), au moins deux des dispositifs d'enregistrement (A, B, C) sont équipés avec les émetteurs-récepteurs (3, 5, 7) adéquats pour chaque utilisation prévue.

13. Circuit selon une des revendications précédentes, **caractérisé en ce qu'**un circuit de synchronisation et de préparation des données (9) est disposé sur le chemin des signaux d'un, de plusieurs ou de tous les dispositifs d'enregistrement (A, B, C).

14. Circuit selon la revendication 13, **caractérisé en ce que** le circuit de synchronisation et de préparation des données (9) comprend une boucle à verrouillage de phase large bande qui est en mesure de se verrouiller dans une plage de débit binaire large bande sur la fréquence d'horloge du signal qui lui est amené et de déterminer chaque débit binaire, et **en ce qu'**est prévue une unité de commande à laquelle est amené le débit binaire, l'unité de commande comparant le débit binaire à des valeurs mémorisées de débits binaires de travail pour lesquels le circuit est spécifié, et le chemin des signaux étant bloqué si le débit binaire déterminé diverge des débits binaires de travail au-delà d'une valeur prescrite.
